# FASCICULE DE BREVET EUROPEEN

(11) **EP 4 010 562 B1**
(45) Date de publication et mention de la délivrance du brevet: **30.08.2023**
(21) Numéro de dépôt: 20756934.4
(22) Date de dépôt: 29.07.2020
(51) Int. Cl.: F01D 11/10, F01D 11/12, F01D 5/22

(54) **AUBE MOBILE POUR UNE ROUE D'UNE TURBOMACHINE D'AÉRONEF, ROUE POUR UNE TURBOMACHINE D'AÉRONEF ET TURBOMACHINE D'AÉRONEF**
LAUFSCHAUFEL FÜR EINEN ROTOR EINER FLUGZEUGTURBOMASCHINE, ROTOR FÜR EINE FLUGZEUGTURBOMASCHINE UND FLUGZEUGTURBOMASCHINE
ROTOR BLADE FOR A ROTOR OF AN AIRCRAFT TURBOMACHINE, ROTOR FOR AN AIRCRAFT TURBOMACHINE AND AIRCRAFT TURBOMACHINE

(30) Priorité: 07.08.2019 FR 1909053
(43) Date de publication de la demande: 15.06.2022
(60) Demande divisionnaire: 23186599.9
(73) Titulaire: Safran Helicopter Engines, 64510 Bordes (FR)
(72) Inventeur: PELLATON, Bertrand, Guillaume, Robin, 77550 MOISSY-CRAMAYEL (FR); BENASSIS, Lucas, 77550 MOISSY-CRAMAYEL (FR)
(74) Mandataire: Gevers & Orès
(86) Numéro de dépôt international: PCT/FR2020/051397
(87) Numéro de publication internationale: WO 2021/023927

(56) Documents cités:
- US-A1- 2007 134 096
- US-A1- 2018 355 742

## Description

### Domaine technique de l'invention

La présente invention se rapporte au domaine général des aubes mobiles pour une roue d'une turbomachine d'aéronef.

### Arrière-plan technique

Classiquement, une turbine axiale de turbomachine comprend une succession d'étages axiaux disposés les uns derrière les autres. Chaque étage comporte une roue mobile à aubes formant rotor et un distributeur aubagé formant stator. La roue est mise en rotation en vis-à-vis du distributeur correspondant. Chaque distributeur est fixé à un carter externe entourant la roue.

La roue comprend un disque annulaire mobile en rotation autour d'un axe X, et une pluralité d'aubes rapportées et fixées sur le disque.

Une aube mobile comprend une pale aérodynamique s'étendant suivant un axe d'empilement Z. La pale de l'aube est délimitée par un pied interne et un talon externe suivant l'axe d'empilement Z.

Les talons externes des aubes mobiles d'une même roue sont disposés flanc à flanc (ou bord à bord) les uns avec les autres, de manière à délimiter extérieurement une veine dans laquelle circule un flux majeur de gaz.

Afin d'optimiser le rendement de la turbine (et de manière plus générale de la turbomachine), il est nécessaire de maximiser la quantité de gaz agissant sur les pales, et autrement dit minimiser les fuites présentes essentiellement entre les talons et le carter externe ainsi qu'entre deux talons adjacents.

Pour limiter les fuites entre un talon et le carter externe, il est connu d'implanter sur le talon de chaque aube au moins une léchette, par exemple deux, en saillie vers l'extérieur depuis une plateforme du talon. Les léchettes sont destinées à coopérer avec un bloc de matière abradable (par exemple une structure en nid d'abeille) fixé sur le carter externe, pour former un joint d'étanchéité dynamique de type labyrinthe. Toutefois, un tel joint ne garantit pas une étanchéité totale entre le talon et le bloc de matière abradable.

Pour limiter les fuites entre deux talons adjacents, il est d'usage de limiter le jeu existant entre deux talons adjacents. Toutefois, il est bon de noter que le jeu entre deux talons évolue en fonction du régime de fonctionnement de la turbomachine, l'étanchéité pouvant ainsi être garantie à un régime de fonctionnement et ne plus l'être à un autre régime de fonctionnement.

Afin de maximiser les rendements, les motoristes cherchent donc continuellement à minimiser les fuites entre un talon et le bloc de matière abradable ainsi qu'entre deux talons adjacents.

L'objectif de la présente invention est donc d'apporter une solution simple, efficace et économique permettant de répondre à la problématique précitée.

L'art antérieur comprend également les documents US-A1-2018/355742 et US-A1-2007/134096.

### Résumé de l'invention

L'invention propose ainsi une aube mobile pour une roue d'une turbomachine d'aéronef, l'aube comportant une pale aérodynamique s'étendant suivant un axe d'empilement Z, la pale étant délimitée par un pied interne et un talon externe suivant l'axe d'empilement Z, le talon comportant au moins une première léchette en saillie destinée à coopérer avec un bloc de matière abradable, l'aube comprenant un circuit intérieur apte à recevoir un premier flux mineur de gaz, ce circuit comportant une cavité d'alimentation débouchant au niveau du pied via au moins une ouverture d'admission, le circuit comprenant au moins deux conduits connectés avec la cavité d'alimentation et débouchant chacun sur une surface extérieure de la première léchette via une ouverture d'échappement de sorte qu'un jet de gaz du premier flux mineur de gaz soit apte à être expulsé de chaque ouverture d'échappement, chaque conduit étant orienté de sorte que le jet de gaz correspondant soit apte à être projeté vers un second flux mineur de gaz fuyant entre le talon et un organe directement adjacent, l'une des deux ouvertures d'échappement étant disposée au niveau d'une face externe de la première léchette et l'autre des deux ouvertures d'échappement étant disposée au niveau d'une face latérale de la première léchette.

Les jets de gaz (premier flux mineur) s'opposent ainsi au second flux mineur de gaz, et plus précisément les jets de gaz cisaillent le second flux mineur de gaz, de manière à réduire son débit, et ainsi réduire les fuites du second flux mineur de gaz entre le talon et l'organe directement adjacent. Une telle réduction du débit du second flux mineur de gaz permet de maximiser les rendements de la turbomachine.

L'organe directement adjacent correspond par exemple au bloc de matière abradable ou au talon d'une aube directement adjacente.

L'aube selon l'invention peut comprendre une ou plusieurs des caractéristiques suivantes, prises isolément les unes des autres ou en combinaison les unes avec les autres :
- au moins l'un des conduits présente une section variable qui converge en direction de l'ouverture d'échappement correspondante ;
- la cavité d'alimentation est apte à recevoir le premier flux mineur de gaz s'échappant d'une veine via au moins l'ouverture d'admission, la veine étant apte à recevoir un flux majeur de gaz ;
- chaque ouverture d'échappement est circulaire ;
- le diamètre de l'ouverture d'échappement de chaque conduit est compris entre 0,2 mm et 2 mm, et de préférence entre 0,3 mm et 0,6 mm ;
- le talon comporte une seconde léchette en saillie et distante de la première léchette ;
- le circuit comprend au moins deux conduits connectés avec la cavité d'alimentation et débouchant chacun sur une surface extérieure de la seconde léchette via une ouverture d'échappement de sorte qu'un jet de gaz du premier flux mineur de gaz soit apte à être expulsé de chaque ouverture d'échappement, chaque conduit étant orienté de sorte que le jet de gaz correspondant soit apte à être projeté vers le second flux mineur de gaz fuyant entre le talon et l'organe directement adjacent. La présente invention concerne encore une roue pour une turbomachine d'aéronef, comportant un disque portant à sa périphérie une rangée annulaire d'aubes telles que décrites précédemment.

La présente invention concerne également une turbomachine d'aéronef comportant une aube telle que décrite précédemment ou une roue telle que décrite précédemment.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue de face d'une aube selon un exemple qui ne fait pas partie de l'invention;
[Fig.2] la figure 2 est une vue de face, partielle, d'une aube selon un exemple qui ne fait pas partie de l'invention;
[Fig.3] la figure 3 est une vue de dessus schématique et partielle d'une aube illustrant un premier exemple de disposition d'ouvertures d'échappement sur une léchette ;
[Fig.4] la figure 4 est une vue de face schématique et partielle de l'aube illustrée sur la figure 3 ;
[Fig.5] la figure 5 est une vue de face schématique et partielle d'une aube illustrant un second exemple de disposition d'ouvertures d'échappement sur une léchette ;
[Fig.6] la figure 6 est une vue de dessus schématique et partielle de l'aube illustrée sur la figure 5 ;
[Fig.7] la figure 7 est une vue de dessus schématique et partielle d'une aube illustrant un troisième exemple de disposition d'ouvertures d'échappement sur une léchette ;
[Fig.8] la figure 8 est une vue de face schématique et partielle de l'aube illustrée sur la figure 7 ;
[Fig.9] la figure 9 est une vue de dessus schématique et partielle d'une aube illustrant un premier exemple de disposition d'une rangée d'ouvertures d'échappement sur une léchette ;
[Fig.10] la figure 10 est une vue de côté schématique et partielle d'une aube illustrant un second exemple de disposition d'une rangée d'ouvertures d'échappement sur une léchette ;
[Fig.11] la figure 11 est une vue de dessus schématique et partielle d'une aube illustrant un exemple de disposition d'une première et d'une seconde rangée d'ouvertures d'échappement sur une léchette ;
[Fig.12] la figure 12 est une vue de dessus schématique et partielle d'une aube illustrant une première variante de réalisation d'un conduit ;
[Fig.13] la figure 13 est une vue de face schématique et partielle d'une aube illustrant une seconde variante de réalisation d'un conduit ;
[Fig.14] la figure 14 est une vue de face schématique et partielle d'une aube illustrant un exemple d'orientation d'un conduit.

### Description détaillée de l'invention

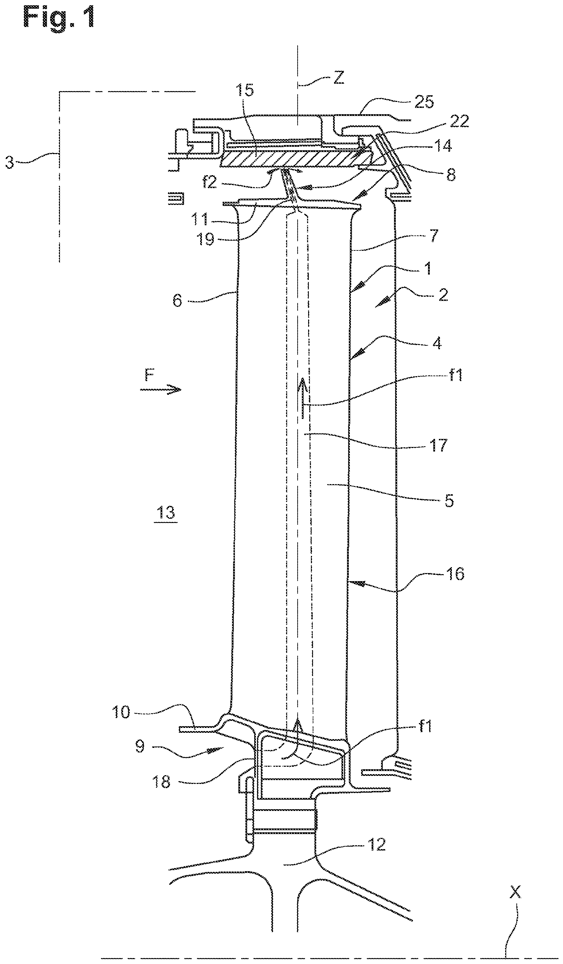

Sur la figure 1 est représentée une aube 1 d'une roue 2 d'une turbomachine 3 d'aéronef, et plus précisément une aube 1 d'une roue 2 d'une turbine de la turbomachine 3. L'aube 1 pourrait être destinée à équiper une roue d'un compresseur de la turbomachine.

L'aube 1 comprend une pale 4 aérodynamique s'étendant suivant un axe d'empilement Z. La pale 4 présente une face intrados 5 et une face extrados reliées l'une à l'autre par un bord d'attaque 6 et un bord de fuite 7. Un flux majeur de gaz F s'écoule autour de la pale 4 depuis le bord d'attaque 6 vers le bord de fuite 7, le bord d'attaque 6 étant ainsi disposé en amont du bord de fuite 7 suivant le sens d'écoulement du flux majeur de gaz F.

Dans un plan transversal (plan perpendiculaire à l'axe d'empilement Z), la pale 4 est profilée suivant une ligne moyenne reliant le bord d'attaque 6 au bord de fuite 7, la ligne moyenne séparant l'aube 1 en un côté intrados et un côté extrados. Les faces intrados et extrados 5 sont incurvées, et respectivement concave et convexe.

Dans la présente demande, les termes « intrados » et « extrados » associés aux différents éléments de l'aube ont pour référence le côté intrados et le côté extrados.

Dans la présente demande, les termes « amont » et « aval » sont définis par rapport au sens d'écoulement du flux majeur de gaz F.

L'aube 1 comprend en outre un talon externe 8 et un pied interne 9 délimitant la pale 4 suivant l'axe d'empilement Z. Plus précisément, la pale 4 est délimitée par une plateforme interne 10 du pied 9 et une plateforme externe 11 du talon 8.

Une roue 2 comprend un disque 12 portant à sa périphérie une rangée annulaire d'aubes 1. Plus précisément, chaque pied 9 comporte par exemple un bulbe configuré pour être engagé dans une alvéole complémentaire pratiquée dans le disque 12. La roue 2 (respectivement l'aube) est mobile en rotation autour d'un axe de rotation X, coaxial avec l'axe longitudinal de la turbomachine 3. La roue 2 est mobile en rotation autour de l'axe X de l'intrados vers l'extrados.

Dans la présente demande, les termes « interne » et « externe » sont définis par rapport à l'axe de rotation X de la roue (ou de l'aube).

Les plateformes externes 11 des aubes mobiles 1 d'une même roue 2 sont disposées flanc à flanc (ou bord à bord) les unes avec les autres, de manière à délimiter extérieurement une veine 13 dans laquelle circule le flux majeur de gaz F. De la même manière, les plateformes internes 10 des aubes mobiles 1 d'une même roue 2 sont disposées flanc à flanc (ou bord à bord) les unes avec les autres, de manière à délimiter intérieurement la veine 13 dans laquelle circule le flux majeur de gaz F.

Le talon 8 d'une aube 1 comporte au moins une léchette 14 (première léchette) en saillie destinée à coopérer avec un bloc de matière abradable 15. L'aube 1 comprend en outre un circuit intérieur 16 apte à recevoir un premier flux mineur de gaz f1, ce circuit 16 comportant une cavité d'alimentation 17 débouchant au niveau du pied 9 via au moins une ouverture d'admission 18.

Selon l'invention, le circuit 16 comprend au moins deux conduits 19 connectés avec la cavité d'alimentation 17 et débouchant chacun sur une surface extérieure 20 de la léchette 14 via une ouverture d'échappement 21 de sorte qu'un jet de gaz J du premier flux mineur de gaz f1 soit apte à être expulsé de chaque ouverture d'échappement 21. Chaque conduit 19 est orienté de sorte que le jet de gaz J correspondant soit apte à être projeté vers un second flux mineur de gaz f2 fuyant entre le talon 8 et un organe directement adjacent 22.

Dans la présente demande, le terme « intérieur » associé à un élément de l'aube indique que cet élément est disposé au-dedans de l'aube. A contrario, le terme « extérieur » associé à un élément de l'aube indique que cet élément est disposé au-dehors de l'aube.

Le premier flux mineur de gaz f1 correspond à un flux s'échappant de la veine 13 au niveau de la plateforme interne 10 et s'introduisant dans la cavité d'alimentation 17 du circuit 16 via l'ouverture d'admission 18. Une fois à l'intérieur du circuit 16, le premier flux mineur f1 s'écoule depuis le pied 9 vers le talon 8 sous l'effet de la rotation de l'aube 1 autour de l'axe X.

Le second flux mineur de gaz f2 correspond à un flux s'échappant de la veine 13 au niveau de la plateforme externe 11, et fuyant entre le talon 8 et un organe directement adjacent 22 tel que le bloc de matière abradable 15 ou le talon 8 d'une aube directement adjacente 23. Le second flux mineur f2 s'écoule de l'amont vers l'aval, ce sens d'écoulement étant dû à la différence de pression entre l'amont et l'aval.

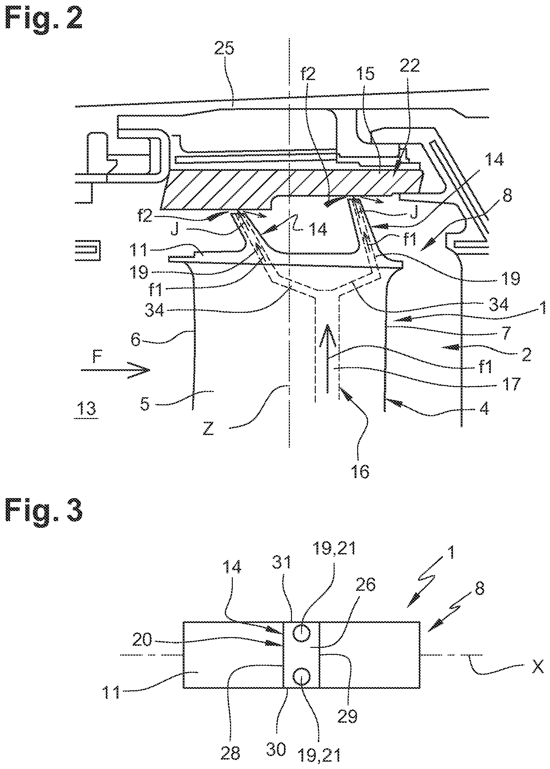

L'aube 1 comprend au moins une léchette 14 mais peut bien évidemment en comprendre plusieurs, par exemple deux, tel qu'illustré sur la figure 2. Une léchette 14 fait saillie vers l'extérieur depuis la plateforme externe 11. Une léchette 14 est destinée à coopérer avec un bloc de matière abradable 15 (par exemple une structure en nid d'abeille) fixé sur un carter externe 25 entourant la roue 2, pour former un joint d'étanchéité de type labyrinthe. Une léchette 14 peut être droite et ainsi s'étendre suivant l'axe d'empilement Z. Une léchette 14 peut être inclinée (avantageusement vers l'amont) d'un angle aigu par rapport à l'axe d'empilement Z. Au moins une léchette est munie de conduits, les autres léchettes pouvant être munies ou non de conduits.

Le circuit 16 peut comprendre, pour chaque léchette 14, deux conduits 19 dont les deux ouvertures d'échappement 21 sont disposées au niveau d'une face externe 26 de la léchette 14. Dans une telle configuration, les jets de gaz J issus des ouvertures d'échappement 21 sont projetés vers un second flux mineur de gaz f2 fuyant entre le talon 8 et le bloc de matière abradable 15. Les jets de gaz J (premier flux mineur) s'opposent ainsi au second flux mineur de gaz f2 (les jets cisaillent le second flux mineur) de manière à réduire son débit, et ainsi réduire les fuites entre le talon 8 et le bloc de matière abradable 15.

Le circuit 16 peut comprendre, pour chaque léchette 14, deux conduits 19 dont les ouvertures d'échappement 21 sont disposées au niveau d'une face latérale 27 de la léchette 14. La face latérale 27 comprend une face latérale amont 28 (ci-après dénommée face amont), une face latérale aval 29 (ci-après dénommée face aval), une face latérale intrados 30 (ci-après dénommée face intrados) et une face latérale extrados 31 (ci-après dénommée face extrados).

Lorsqu'une ouverture d'échappement 21 est disposée au niveau d'une face amont 28 (ou une face aval 29), le jet de gaz J issu de cette ouverture d'échappement 21 est projeté vers un second flux mineur de gaz f2 fuyant entre le talon 8 et le bloc de matière abradable 15. Un tel jet de gaz J (premier flux mineur) s'oppose au second flux mineur de gaz f2 (le jet cisaille le second flux mineur) de manière à réduire son débit, et ainsi réduire les fuites entre le talon 8 et le bloc de matière abradable 15.

Lorsqu'une ouverture d'échappement 21 est disposée au niveau d'une face intrados 30 (ou une face extrados 31), le jet de gaz J issu de cette ouverture d'échappement 21 est projeté vers un second flux mineur de gaz f2 fuyant entre le talon 8 et un talon 8 d'une aube directement adjacente 23. Un tel jet de gaz J (premier flux mineur) s'oppose au second flux mineur de gaz f2 (le jet cisaille le second flux mineur) de manière à réduire son débit, et ainsi réduire les fuites entre deux talons 8 adjacents.

Le circuit 16 peut comprendre, pour chaque léchette 14, deux conduits 19 dont l'une des deux ouvertures d'échappement 21 est disposée au niveau d'une face externe 26 de la léchette 14, et l'autre des deux ouvertures d'échappement 21 est disposée au niveau d'une face latérale 27 de la léchette 14.

Le circuit 16 peut bien évidement comprendre, pour chaque léchette 14, plus de deux conduits 19 dont les ouvertures d'échappement 21 sont disposées chacune au niveau d'une surface extérieure 20 de la léchette 14. Le circuit 16 peut comprendre, pour chaque léchette 14, une première rangée 32 d'au moins trois conduits 19 connectés avec la cavité d'alimentation 17 et débouchant chacun sur la surface extérieure 20 de la léchette 14 via une ouverture d'échappement 21.

Dans la présente demande, une rangée comprend au moins trois conduits. Sur une même rangée, le pas entre deux ouvertures d'échappement peut être constant ou variable.

Le circuit 16 peut comprendre, pour chaque léchette 14, une seconde rangée 33 d'au moins trois conduits 19 connectés avec la cavité d'alimentation 17 et débouchant chacun sur la surface extérieure 20 de la léchette 14 via une ouverture d'échappement 21.

Les ouvertures d'échappement 21 des conduits 19 de la première rangée 32 peuvent être disposées en quinconce par rapport aux ouvertures d'échappement 21 des conduits 19 de la seconde rangée 33.

Le circuit 16 peut bien évidement comprendre, pour chaque léchette, plus de deux rangées d'au moins trois conduits. Le pas entre deux rangées consécutives peut être constant ou variable.

Un conduit 19 s'étend (ou est défini) suivant un axe d'allongement A depuis une extrémité interne jusqu'à l'ouverture d'échappement 21 correspondante. Un conduit 19 peut présenter une section constante le long de son axe d'allongement A.

Un conduit 19 peut présenter une section variable le long de son axe d'allongement A. Avantageusement, un conduit 19 présente une section variable qui converge en direction son ouverture d'échappement 21, de manière à augmenter la vitesse du jet de gaz J correspondant, et ainsi accroître la réduction du débit du second flux mineur de gaz f2.

A titre d'exemple, un conduit 19 (respectivement l'ouverture d'échappement) peut être de section circulaire, rectangulaire, etc.

Avantageusement, lorsque l'ouverture d'échappement 21 est circulaire, le diamètre de l'ouverture 21 est compris entre 0,2 mm et 2 mm, et de préférence entre 0,3 mm et 0,6 mm.

Quelle que soit la forme de l'ouverture d'échappement 21, la dimension maximale de cette ouverture 21 est comprise entre 0,2 mm et 2 mm.

La forme d'une ouverture d'échappement peut différer de celle du reste du conduit.

Un conduit 19 (ou l'axe d'allongement A d'un conduit) peut, dans un plan longitudinal, être droit et ainsi s'étendre sensiblement suivant l'axe d'empilement Z.

Un conduit 19 (ou l'axe d'allongement A d'un conduit) peut, dans un plan longitudinal, être incliné d'un angle aigu α par rapport à l'axe d'empilement Z. Avantageusement, un conduit 19 est incliné vers l'amont, de manière à ce que le sens du jet de gaz J (premier flux mineur) soit opposé au sens d'écoulement du second flux mineur f2.

Les conduits d'une aube 1 peuvent avoir des caractéristiques géométriques (forme, orientation, etc.) et dimensionnelles égales. Au contraire, en fonction de l'importance des fuites, chaque conduit peut avoir des caractéristiques géométriques et dimensionnelles spécifiques.

La cavité 17 du circuit 16 d'une aube 1 est alimentée (premier flux mineur de gaz) via au moins une ouverture d'admission 18 disposée au niveau du pied 9 de l'aube 1. Avantageusement, la cavité 17 présente de grandes dimensions, de manière à minimiser les pertes de pression. Les conduits 19 sont connectés directement ou indirectement à la cavité 17.

Selon le premier mode de réalisation illustré sur la figure 1, l'aube 1 comprend une unique léchette 14 médiane. Le circuit 16 comprend une cavité 17 qui s'étend le long de l'axe d'empilement Z. Le circuit 16 comprend deux conduits 19 dont les deux ouvertures d'échappement 21 sont disposées au niveau de la face externe 26 de la léchette 14. Les deux conduits 19 sont ici connectés directement à la cavité 17.

Selon le second mode de réalisation illustré sur la figure 2, l'aube 1 comprend une léchette 14 amont et une léchette 14 aval. Le circuit 16 comprend deux conduits 19 amont dont les deux ouvertures d'échappement 21 sont disposées au niveau de la face externe 26 de la léchette 14 amont et deux conduits 19 aval dont les deux ouvertures d'échappement 21 sont disposées au niveau de la face externe 26 de la léchette 14 aval. Les conduits 19 sont ici connectés indirectement à la cavité 17, à savoir via des passages intermédiaires 34.

La léchette amont ou la léchette aval pourraient ne pas avoir de conduits (respectivement d'ouvertures d'échappement).

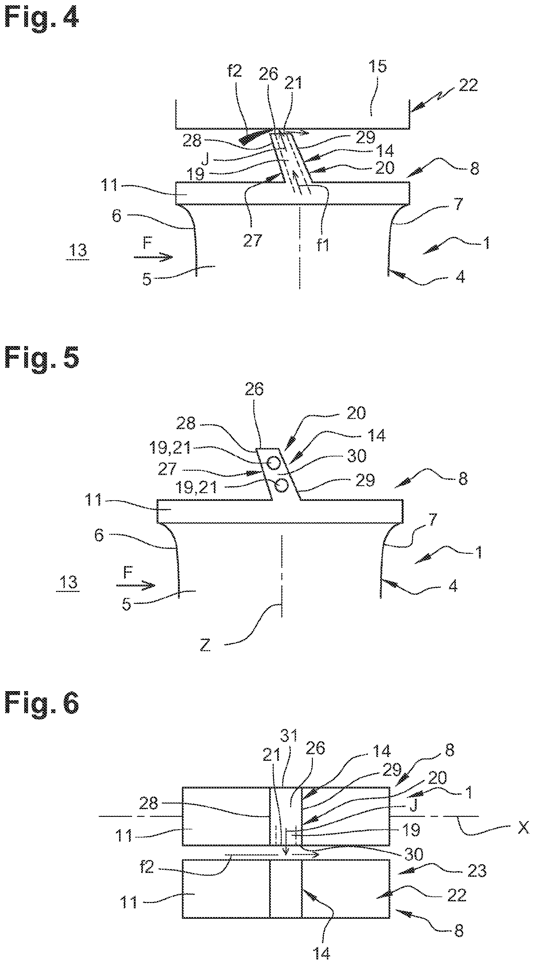

Les figures 3 et 4 illustrent un premier exemple de disposition des ouvertures d'échappement 21 sur une léchette 14, dans lequel les deux ouvertures d'échappement 21 sont disposées au niveau de la face externe 26 de la léchette 14.

Les figures 5 et 6 illustrent un second exemple de disposition des ouvertures d'échappement 21 sur une léchette 14, dans lequel les deux ouvertures d'échappement 21 sont disposées au niveau de la face intrados 30 de la léchette 14.

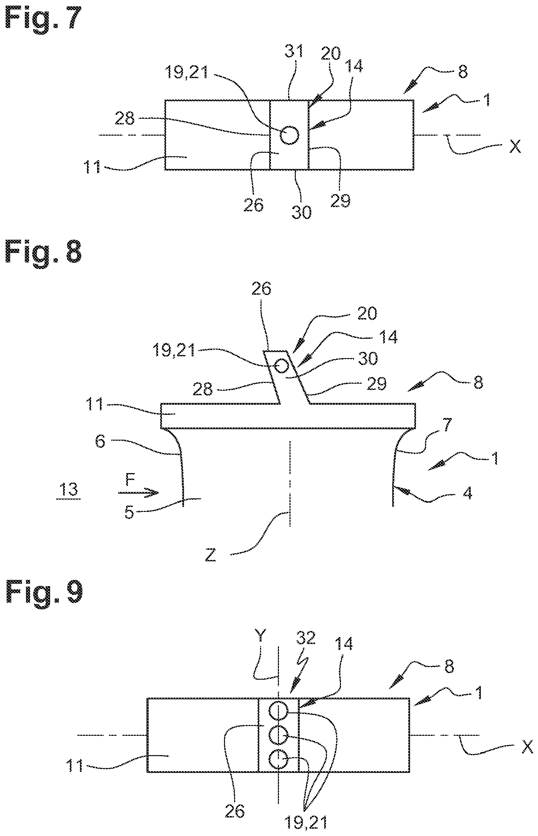

Les figures 7 et 8 illustrent un troisième exemple de disposition des ouvertures d'échappement 21 sur une léchette 14, dans lequel une ouverture d'échappement 21 est disposée au niveau de la face externe 26 de la léchette 14 et une ouverture d'échappement 21 est disposée au niveau de la face intrados 30 de la léchette 14.

La figure 9 illustre un premier exemple de disposition d'une rangée 32 de conduits 19 sur une léchette 14, dans lequel les ouvertures d'échappement 21 des conduits 19 de la rangée 32 sont disposées au niveau de la face externe 26 de la léchette 14. Les ouvertures d'échappement 21 sont disposées le long d'un axe Y qui est tangent à la direction de rotation de l'aube 1 autour de son axe de rotation X. Le pas entre deux ouvertures d'échappement 21 est constant.

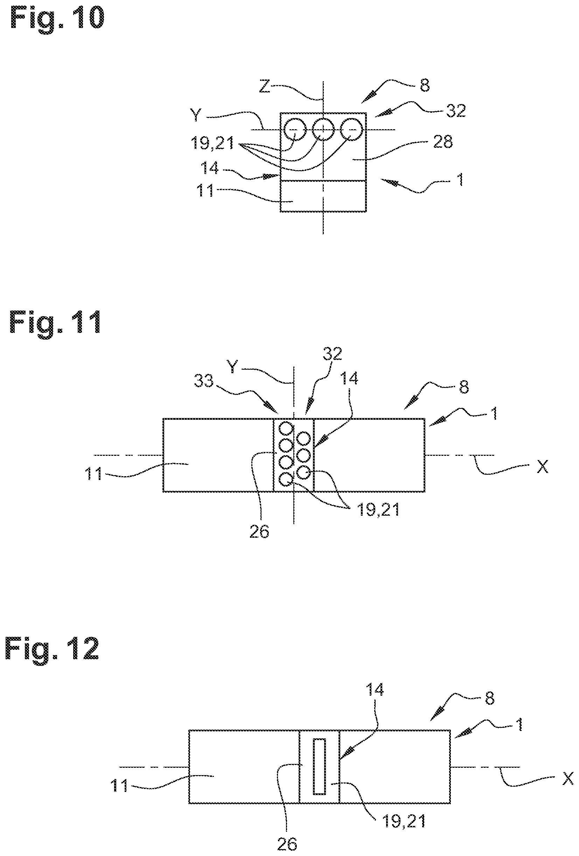

La figure 10 illustre un second exemple de disposition d'une rangée 32 de conduits 19 sur une léchette 14, dans lequel les ouvertures d'échappement 21 des conduits 19 de la rangée 32 sont disposées au niveau de la face amont 28 de la léchette 14. Les ouvertures d'échappement 21 sont disposées le long de l'axe Y qui est tangent à la direction de rotation de l'aube 1. Le pas entre deux ouvertures d'échappement 21 est constant.

La figure 11 illustre un exemple de disposition d'une première et d'une seconde rangée 32, 33 de conduits 19 sur une léchette 14, dans lequel les ouvertures d'échappement 21 des conduits 19 de la première rangée 32 sont disposées en quinconce par rapport aux ouvertures d'échappement 21 des conduits 19 de la seconde rangée 33. Les première et seconde rangées 32, 33 comprennent respectivement trois et quatre conduits 19. Les ouvertures d'échappement 21 des première et seconde rangées 32, 33 sont disposées au niveau de la face externe 26 de la léchette 14. Les ouvertures d'échappement 21 des première et seconde rangées 32, 33 sont disposées le long de l'axe Y.

Sur les figures 3 à 11, chacun des conduits 19 (respectivement les ouvertures d'échappement) présente une section circulaire constante le long de son axe d'allongement A.

La figure 12 illustre une première variante de réalisation d'un conduit 19 dans laquelle le conduit 19 (respectivement l'ouverture d'échappement) présente une section rectangulaire le long de son axe d'allongement A.

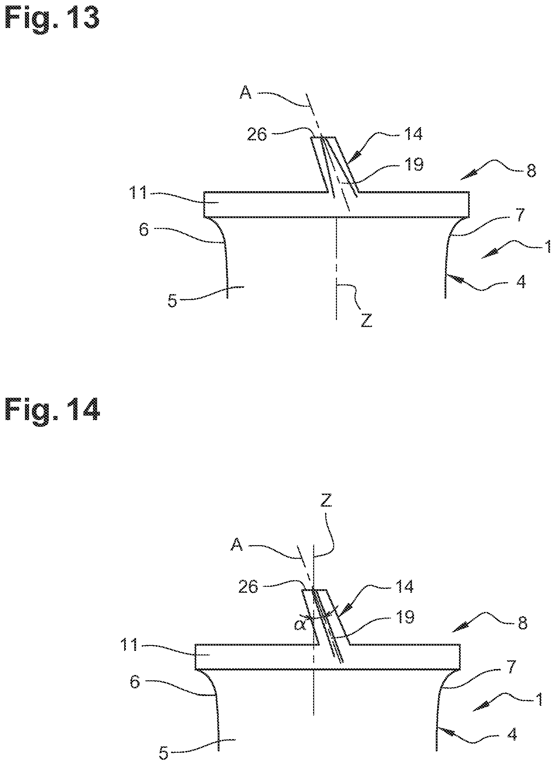

La figure 13 illustre une seconde variante de réalisation d'un conduit 19 dans laquelle le conduit 19 présente une section variable le long de son axe d'allongement A.

La figure 14 illustre un exemple d'orientation d'un conduit 19 dans lequel le conduit 19 (ou l'axe d'allongement A du conduit) est, dans un plan longitudinal, incliné d'un angle aigu α vers l'amont par rapport à l'axe d'empilement Z.

L'aube 1 est par exemple réalisée via un procédé comportant premièrement l'obtention d'une aube brute de fonderie via un procédé de moulage en cire perdue, et deuxièmement diverses opérations d'usinage réalisées sur l'aube brute (telles que le perçage des conduits) afin d'obtenir une aube présentant des cotes définitives telles que détaillées sur le dessin de définition.

L'aube 1 pourrait également être obtenue par fabrication additive (prototypage rapide).

## Revendications

1. Aube (1) mobile pour une roue (2) d'une turbomachine (3) d'aéronef, l'aube (1) comportant une pale (4) aérodynamique s'étendant suivant un axe d'empilement (Z), la pale (4) étant délimitée par un pied interne (9) et un talon externe (8) suivant l'axe d'empilement (Z), le talon (8) comportant au moins une première léchette (14) en saillie destinée à coopérer avec un bloc de matière abradable (15), l'aube (1) comprenant un circuit intérieur (16) apte à recevoir un premier flux mineur de gaz (f1), ce circuit (16) comportant une cavité d'alimentation (17) débouchant au niveau du pied (9) via au moins une ouverture d'admission (18), le circuit (16) comprenant au moins deux conduits (19) connectés avec la cavité d'alimentation (17) et débouchant chacun sur une surface extérieure (20) de la première léchette (14) via une ouverture d'échappement (21) de sorte qu'un jet de gaz (J) du premier flux mineur de gaz (f1) soit apte à être expulsé de chaque ouverture d'échappement (21), chaque conduit (19) étant orienté de sorte que le jet de gaz (J) correspondant soit apte à être projeté vers un second flux mineur de gaz (f2) fuyant entre le talon (8) et un organe directement adjacent (22), **caractérisée en ce que** l'une des deux ouvertures d'échappement (21) est disposée au niveau d'une face externe (26) de la première léchette (14), et l'autre des deux ouvertures d'échappement (21) est disposée au niveau d'une face latérale (27) de la première léchette (14).

2. Aube (1) selon la revendication 1, **caractérisée en ce qu'**au moins l'un des conduits (19) présente une section variable qui converge en direction de l'ouverture d'échappement (21) correspondante.

3. Aube (1) selon l'une des revendications précédentes, **caractérisée en ce que** la cavité d'alimentation (17) est apte à recevoir le premier flux mineur de gaz (f1) s'échappant d'une veine (13) via au moins l'ouverture d'admission (18), la veine (13) étant apte à recevoir un flux majeur de gaz (F).

4. Aube (1) selon l'une des revendications précédentes, **caractérisée en ce que** chaque ouverture d'échappement (21) est circulaire.

5. Aube (1) selon la revendication précédente, **caractérisée en ce que** le diamètre de l'ouverture d'échappement (21) de chaque conduit (19) est compris entre 0,2 mm et 2 mm, et de préférence entre 0,3 mm et 0,6 mm.

6. Aube (1) selon l'une des revendications précédentes, **caractérisée en ce que** le talon (8) comporte une seconde léchette (14) en saillie et distante de la première léchette (14).

7. Aube (1) selon la revendication 6, **caractérisée en ce que** le circuit (16) comprend au moins deux conduits (19) connectés avec la cavité d'alimentation (17) et débouchant chacun sur une surface extérieure (20) de la seconde léchette (14) via une ouverture d'échappement (21) de sorte qu'un jet de gaz (J) du premier flux mineur de gaz (f1) soit apte à être expulsé de chaque ouverture d'échappement (21), chaque conduit (19) étant orienté de sorte que le jet de gaz (J) correspondant soit apte à être projeté vers le second flux mineur de gaz (f2) fuyant entre le talon (8) et l' organe directement adjacent (22).

8. Roue (2) pour une turbomachine (3) d'aéronef, comportant un disque (12) portant à sa périphérie une rangée annulaire d'aubes (1) selon l'une des revendications précédentes.

9. Turbomachine (3) d'aéronef comportant une aube (1) selon l'une des revendications 1 à 7 ou une roue (2) selon la revendication 8.

## Patentansprüche

1. Laufschaufel (1) für einen Rotor (2) einer Turbomaschine (3) eines Luftfahrzeugs, wobei die Schaufel (1) ein aerodynamisches Blatt (4) umfasst, das sich entlang einer Stapelachse (Z) erstreckt, wobei das Blatt (4) durch einen inneren Fuß (9) und einen äußeren Absatz (8) entlang der Stapelachse (Z) begrenzt ist, der Absatz (8) mindestens eine erste vorspringende Zunge (14) aufweist, die dazu bestimmt ist, mit einem Block aus abreibbarem Material (15) zusammenzuwirken, die Schaufel (1) einen inneren Kreislauf (16) aufweist, der geeignet ist, einen ersten kleineren Gasstrom (f1) aufzunehmen, wobei dieser Kreislauf (16) einen Zuführungshohlraum (17) aufweist, der auf Höhe des Fußes (9) über mindestens eine Einlassöffnung (18) mündet, wobei der Kreislauf (16) mindestens zwei Kanäle (19) umfasst, die mit dem Versorgungshohlraum (17) verbunden sind und jeweils über eine Auslassöffnung (21) an einer Außenfläche (20) der ersten Zunge (14) münden, so dass ein Gasstrahl (J) des ersten kleineren Gasstroms (f1) aus jeder Auslassöffnung (21) ausgestoßen werden kann, wobei jeder Kanal (19) so ausgerichtet ist, dass der entsprechende Gasstrahl (J) geeignet ist, in Richtung eines zweiten kleineren Gasstroms (f2) ausgestoßen zu werden, der zwischen dem Absatz (8) und einem direkt angrenzenden Organ (22) austritt, **dadurch gekennzeichnet, dass** eine der beiden Auslassöffnungen (21) an einer Außenfläche (26) der ersten Zunge (14) angeordnet ist und die andere der beiden Auslassöffnungen (21) an einer Seitenfläche (27) der ersten Zunge (14) angeordnet ist.

2. Schaufel (1) nach Anspruch 1, **dadurch gekennzeichnet, dass** mindestens einer der Kanäle (19) einen variablen Querschnitt aufweist, der in Richtung der entsprechenden Auslassöffnung (21) konvergiert.

3. Schaufel (1) nach einem der vorstehenden Ansprüche, **dadurch gekennzeichnet, dass** der Zuführungshohlraum (17) geeignet ist, den ersten kleineren Gasstrom (f1) aufzunehmen, der aus einem Gang (13) über mindestens die Einlassöffnung (18) entweicht, wobei der Gang (13) geeignet ist, einen größeren Gasstrom (F) aufzunehmen.

4. Schaufel (1) nach einem der vorstehenden Ansprüche, **dadurch gekennzeichnet, dass** jede Auslassöffnung (21) kreisförmig ist.

5. Schaufel (1) nach dem vorstehenden Anspruch, **dadurch gekennzeichnet, dass** der Durchmesser der Auslassöffnung (21) jedes Kanals (19) zwischen 0,2 mm und 2 mm und vorzugsweise zwischen 0,3 mm und 0,6 mm liegt.

6. Schaufel (1) nach einem der vorstehenden Ansprüche, **dadurch gekennzeichnet, dass** der Absatz (8) eine zweite Zunge (14) aufweist, die von der ersten Zunge (14) beabstandet vorsteht.

7. Schaufel (1) nach Anspruch 6, **dadurch gekennzeichnet, dass** der Kreislauf (16) mindestens zwei Kanäle (19) umfasst, die mit dem Zuführungshohlraum (17) verbunden sind und jeweils über eine Auslassöffnung (21) an einer Außenfläche (20) der zweiten Zunge (14) münden, so dass ein Gasstrahl (J) des ersten kleineren Gasstroms (f1) aus jeder Auslassöffnung (21) ausgestoßen werden kann, wobei jeder Kanal (19) so ausgerichtet ist, dass der entsprechende Gasstrahl (J) geeignet ist, in Richtung des zweiten kleineren Gasstroms (f2) ausgestoßen zu werden, der zwischen dem Absatz (8) und dem direkt angrenzenden Element (22) austritt.

8. Rotor (2) für eine Turbomaschine (3) eines Luftfahrzeugs, mit einer Scheibe (12), die an ihrem Umfang eine ringförmige Reihe von Schaufeln (1) nach einem der vorstehenden Ansprüche trägt.

9. Turbomaschine (3) eines Luftfahrzeugs mit einer Schaufel (1) nach einem der Ansprüche 1 bis 7 oder einem Rotor (2) nach Anspruch 8.

## Claims

1. A movable vane (1) for a wheel (2) of an aircraft turbine engine (3), the vane (1) comprising an aerodynamic blade (4) extending along a stacking axis (Z), the blade (4) being delimited by an inner root (9) and an outer heel (8) along the stacking axis (Z), the heel (8) comprising at least a first protruding lip (14) intended to cooperate with a block of abradable material (15), the vane (1) comprising an internal circuit (16) capable of receiving a first minor gas flow (f1), this circuit (16) comprising a supply cavity (17) opening at the root (9) via at least one inlet opening (18), the circuit (16) comprising at least two ducts (19) connected with the supply cavity (17) and each opening onto an external surface (20) of the first lip (14) via a discharge opening (21) so that a gas jet (J) of the first minor gas flow (f1) is adapted to be expelled from each discharge opening (21), each duct (19) being oriented such that the corresponding gas jet (J) is adapted to be projected towards a second minor gas flow (f2) leaking between the heel (8) and a directly adjacent member (22), **characterised in that** one of the two discharge openings (21) is arranged at an outer face (26) of the first lip (14), and the other of the two discharge openings (21) is arranged at a lateral face (27) of the first lip (14).

2. The vane (1) according to claim 1, **characterised in that** at least one of the ducts (19) has a variable cross-section which converges towards the corresponding discharge opening (21).

3. The vane (1) according to one of the preceding claims, **characterised in that** the supply cavity (17) is adapted to receive the first minor gas flow (f1) escaping from a vein (13) via at least the inlet opening (18), the vein (13) being adapted to receive a major gas flow (F).

4. The vane (1) according to one of the preceding claims, **characterised in that** each discharge opening (21) is circular.

5. The vane (1) according to the preceding claim, **characterised in that** the diameter of the discharge opening (21) of each duct (19) is between 0.2 mm and 2 mm, and preferably between 0.3 mm and 0.6 mm.

6. The vane (1) according to one of the preceding claims, **characterised in that** the heel (8) comprises a second lip (14) projecting and distant from the first lip (14).

7. The vane (1) according to claim 6, **characterised in that** the circuit (16) comprises at least two ducts (19) connected with the supply cavity (17) and each opening onto an external surface (20) of the second lip (14) via a discharge opening (21) so that a gas jet (J) of the first minor gas flow (f1) is adapted to be expelled from each discharge opening (21), each duct (19) being oriented such that the corresponding gas jet (J) is adapted to be projected towards the second minor gas flow (f2) leaking between the heel (8) and the directly adjacent member (22).

8. A wheel (2) for an aircraft turbine engine (3), comprising a disc (12) carrying at its periphery an annular row of vanes (1) according to one of the preceding claims.

9. An aircraft turbine engine (3) comprising a vane (1) according to one of claims 1 to 7 or a wheel (2) according to claim 8.
